# EUROPEAN PATENT SPECIFICATION

(11) **EP 0 858 421 B1**
(45) Date of publication and mention of the grant of the patent: **12.01.2000**
(21) Application number: 96905987.2
(22) Date of filing: 11.03.1996
(51) Int. Cl.: B65F 1/00, B65F 1/14

(54) **REFUSE RECYCLING APPARATUS**
MÜLLVERWERTUNGSANLAGE
APPAREIL DE RECYCLAGE DE DECHETS

(30) Priority: 31.10.1995 IT MI952253
(43) Date of publication of application: 19.08.1998
(73) Proprietor: Iucolano, Gbattista, Bruno, 20047 Brugherio (IT)
(72) Inventor: Iucolano, Gbattista, Bruno, 20047 Brugherio (IT)
(74) Representative: Lecce, Giovanni
(86) International application number: IT9600046
(87) International publication number: WO9716362

(56) References cited:
- EP-A- 0 600 808
- WO-A-91/13010
- DE-A- 4 340 857
- DE-A- 4 407 600
- DE-U- 9 315 201
- FR-A- 2 698 023
- US-A- 5 447 017

## Description

### Technical Field

This invention concerns a new electromechanical apparatus, electronically automated, multifunctional and multisystem, dedicated to the sector of pollution prevention. It works on four main functions, independent of each other insofar each function can be activated in total autonomy or simultaneously with the other ones, as they are fully electronically automated by their own functionality and are equipped with a safety electronic system. The apparatus is so designed to grant the sorting, compacting and collection in appropriate separated containers for solid city waste, in the places where they are produced; in derail they are glass, ceramics, plastics, polystyrene, plate, aluminium, paperboard, paper.

### Description of the prior art

An apparatus for sorting, fractionating, compacting and collecting solid city waste is known from documents FR-A-2 698 023 and DE-A-44 07 600. The apparatus disclosed in document FR-A-2 698 023 has the features of the preamble of claim 1.

### Disclosure of the invention

The apparatus of the present invention is characterized by the features of the characterizing part of claim 1.

Particular embodiments of the apparatus of the present invention are set out in dependent claims 2 to 14.

To comply with the requirements of the specific problem, the apparatus of the present invention has been designed in three basic versions, namely:
a) Electric utensil version - for family use:
b) Medium apparatus version - for small joint owner communities, pubs, restaurants, shops and any other medium consumer,
c) Big apparatus version - for large joint owner communities, hotels, catering, mess rooms, hospitals, barracks and any other large consumer.

The apparatus, according to this invention, aims at the following results:
1) progressive elimination of road trash containers, that are presently in use, spread everywhere and causing environmental and atmospheric pollution;
2) progressive elimination of glass collection bells;
3) progressive disuse of open air waste dumps, leaving on a small number of them in activity for the collection of inert waste and durables;
4) progressive dismantlement of most incinerators, presently in activity or a-building;
5) realization of big savings derived from reduced transport to and from waste dumps and/or incinerators, specially if placed outside district;
6) elimination of a conspicuous percentage of local rates for the collection and disposal of city waste;
7) progressive medium term recovery of solid waste to be recycled up to 90% approx.

The environmental improvement will be the natural consequence of the progressive employment of the above mentioned apparatus; as a matter of fact very small financial engagements, transfered from savings, will be sufficient for bringing to life a healthier environment, a better way of living for the comfort of everybody.

The apparatus of the present invention comprises, within one single case, four devices that are suitable to perform filly automated functions, such as to grant four different treatments of the entered solid city waste, in absolutely safe conditions and without external development of gases, smokes and exceeding noise, as the same is insulated.

### Brief Description of the Drawings

These characteristics, and other more of functional and executional nature, of the new apparatus, that forms the object of the present industrial invention, shall be better comprehended by reading the following description regarding an example of realization of the same apparatus that is illustrated at merely indicative title, in the annexed drawings, wherein:

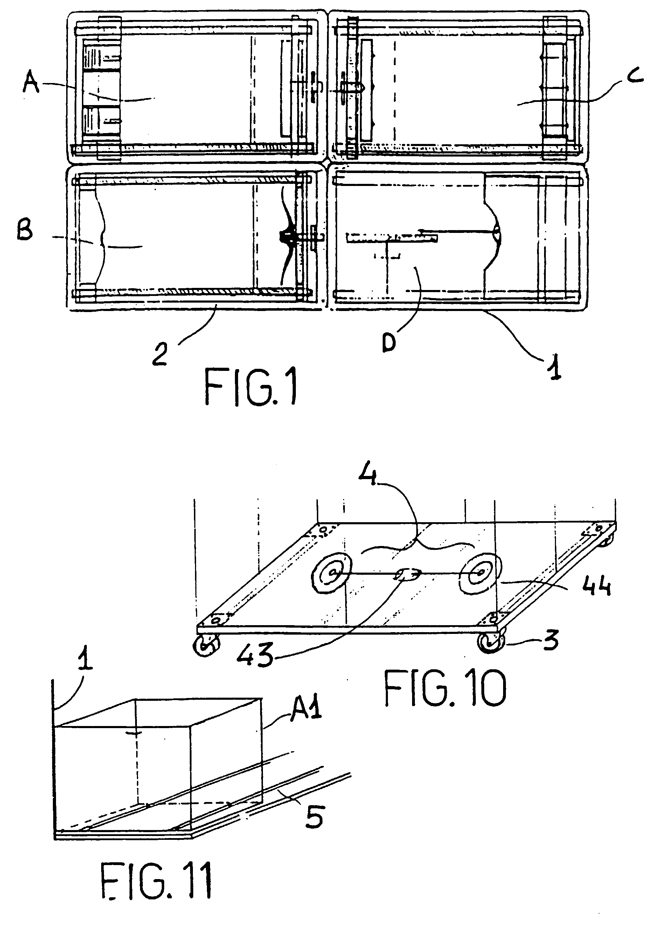

- Fig. 1: is a top view that schematically represents the apparatus with a section of the outside case, enabling to see the location of the four solid city waste sorting and treatment devices, as well as the devices and systems for their collection and treatment;

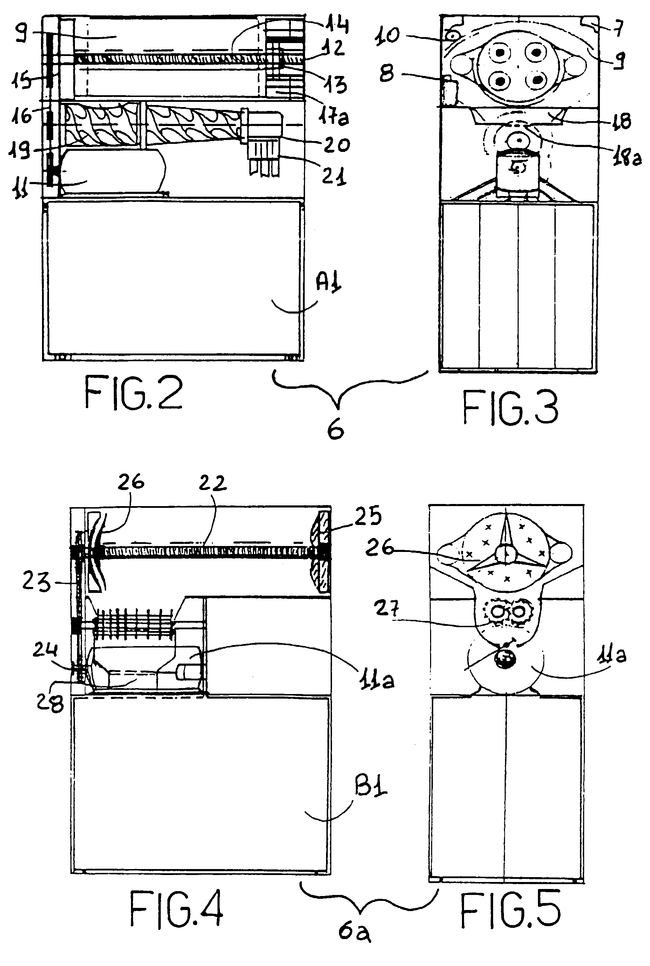

- Fig. 2: is a side view of the inside of the glass and ceramics treatment device (first function) of the apparatus according to the invention;
- Fig. 3: is a front view of the inside of device in fig. 2;
- Fig. 4: is a side view of the inside of the plastics and polystyrene treatment device (second function) of the apparatus according to the invention;

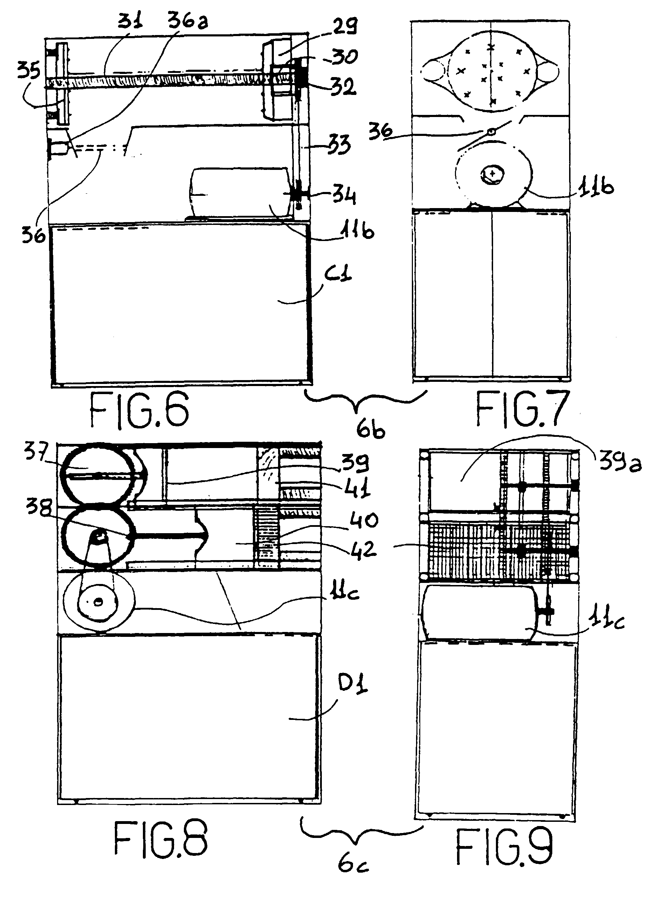

- Fig. 5: is a front view of the inside of device in fig. 4;
- Fig. 6: is a side view of the inside of the aluminium and plate treatment device (third function) of the apparatus according to the invention;
- Fig. 7: is a front view of the inside of device in fig 6;
- Fig. 8: is a side view of the inside of the paper and paperboard treatment device (fourth function) of the apparatus according to the invention;
- Fig. 9: is a front view of the inside of device in fig. 8;
- Fig. 10: illustrates the basement of the outside case of the apparatus according to the invention, suitable to contain the four devices for the separate treatment of waste;
- Fig. 11: illustrates a container for the treated waste and the relevant guiding means.

### Description of the Preferred Embodiment

With specific reference to the above listed figures, it is possible to observe that the apparatus is internally divided into four sectors of equal dimensions, each one corresponding to its specific equipment for the distinguished treatment of the solid city waste to be treated, as well as for its collection after treatment, namely:
A) Glass-Ceramics Sector;
B) Plastics-Polystyrene Sector;
C) Aluminium-Plate Sector;
D) Paper-Paperboard Sector.

The apparatus consists of an external metal case (1) realized in sheet iron with the shape of a rectangular parallelepipedon with a soundproof interspace (2), inside which the four load bearing structures are arranged, independent of each other, respectively relevant to the four devices, as well as the relating electromechanical and electronic parts and the motion transmission systems.

Under the case basement there are arranged four spheroidal rubber-coated omnidirectional wheels (3) and a floor fixing vibration-damping system (4). In the lower part of the case (1) are lodged the four containers (A1, B1, C1, D1), extractible, suitable to contain the sorted solid waste after treatment. Such containers are provided with small omnidirectional rubber-coated wheels and can be extracted from the case (1) of the apparatus with the aid of guiding tracks (5) fixed to the same base.

Each container corresponds to a specific function of the apparatus, being equipped within its inside with suitable compartments for the reception of the solid waste treated within the functionally connected device. Each container is therefore provided with identification means that grant its correct attachment into the apparatus.

Said containers (A1, B1, C1, D1) have standard dimensions and are provided with joints to fix one another superimposed for transport on vehicles; they are also suitable to be washed and disinfected by means of mechanized washing and disinfection systems.

The apparatus according to this invention consists of an ensemble of functional devices for the distinguished treatment of solid city waste and provides: - for the treatment of glass and ceramics (first function) - a device (6) inside which is arranged an electronic photocell system (7) connected with a timer (8) that induces the opening of the loading port (9) with an internal semicircular rotation; such rotation is controlled by an electric micromotor (10). All this is induced by the interruption of the electronic photocell beam, provided approaching of the solid material to be disposed into the loading cell of the device (6). After a few seconds from the disposal of the solid, the port (9) closes under the control of the timer (8); while moving, the port (9) activates a sensor that starts the electric motor (11). This electronic starting system of the device is also provided in the other three devices of the apparatus, and, therefore, it will be briefly and simply called "Automated electronic inlet and treatment phase starting system". At this moment starts the process of treatment of the solid, that is divided into three distinguished phases, namely:

### Phase a) Pressofractionation.

Two toothed wheels with internal helicoid (12) are provided in suitable protrusions by the sides of a cilindrical piston (13); both wheels engage two worm shafts (14) which, driven by toothed wheels (15) connected to the transmission of the motor shaft with a toothed belt system (16), grant the ramming movement of the newly designed piston (17), that includes within "its head" four small cylindrical rammers (17a) provided with specially shaped heads in hardened steel, that can perform cadenced percussions on the solids to be treated. The combined action of the pressing piston (17) with the cadenced percussions of the rammers (17a) arranged within its body, grants the demolition and fractionation of glass and/or ceramic solids being treated. The piston (17) at stroke end impacts an electronic sensor that stops the stroke with the rotational inversion of motion, so inducing it back to starting position. During the return phase the piston opens a small hopper inlet (18) where the splinters of the phase product fall together by gravity. The opening of the small hopper port (18a) is controlled by the piston movement by coupling and releasing a lever system.

### Phase b) Pressotrituration.

Connected under the decentered hopper (18), there is assembled a special worm triturator for glass and ceramics (19) suitable to transform the fractionated materials into extra fine fragments. These, little by little are conveyed to a particular product selecting revolver (20), consisting of a threaded lock ring, a revolver drum with four terminal holes corresponding to four oriented chute pipes (21), each one leading to a compartment of the container. This artifice grants the possibility to stock in one single container with four compartments three kinds of glass differring in colour, in order to facilitate the work of the recycling concerns, whereas the fourth compartment is reserved to stocking the treated ceramic waste.

The apparatus according to this invention moreover provides - for the treatment of plastics and polystyrene (second function) - a device (6a), which also employs the above mentioned "automated electronic inlet and treatment phase starting system". This device includes within its inside the functional means that are suitable to perform the foreseen operational phases, namely:

### Phase a) - Pressofractionation:

Two worm shafts (22) driven by means of toothed wheels (23), connected with the shaft (24) of the motor (11a), bring forward the special cylindrical piston (25) bearing on its sides in correspondence with the worms two toothed wheels with internal helicoid, that, engaging the worms, grant the horizontal pressing movement of the piston (25). The letter, that has a particularly shaped head, presses the solid object to be treated (i.e. a plastic bottle) against a three-bladed propeller shear with cutting edges (26) and particular profile, corresponding to the negative profile of the piston head (25). The shear, turning at higher speed than the pressing piston (25) forward movement, grants the disintegration of the object under treatment. At the stroke end, the piston (25) impacts a rotation inversion sensor that induces its return to starting position in order to receive and treat other solids.

### Phase b) - Fine Trituration.

The disintegrated solids, by gravity, reach the gears and blades of two special triturating rollers (27), thus receiving a further fine trituration treatment.

### Phase c) - Selection-Stocking.

The cuttings produced with the combined actions of the treatment phases a) and b) fall by gravity into a two way platform scale (28) that is induced to opening position by an electronic photocell-relay system. The product is then conveyed to its own compartment within the container (B1.) and becomes consequently ready for periodical collection for recycling purposes.

The apparatus according to this invention also provides - for the treatment of aluminium and plate (third function) - a device (6b), which also employs the above mentioned "automated electronic inlet and treatment phase starting system". Such device includes, within its inside, the functional means that are suitable to the execution of the foreseen operation phases, namely:

### Phase a) - Piercing Compactification.

The working phase of this function consists of a presso-compacting action on the solid to be treated, originated from a particular piston (29), sliding by means of two toothed wheels with internal helicoid (30), that are integral within the piston (29), with two worms (31) working as bearing and drive shafts, connected by means of toothed gears (32) and with belt transmission (33) to the shaft (34) of the electric motor (11b). The piston (29), with cylindrical shape, is provided on its head with a particular riveting (29a) for piercing, during the pressing action, tight containers (e.g. aerosol bombs and spray dispensers, etc.) of plate and aluminium, that, should they be compacted without being pierced simultaneously, might cause explosions.

The advancing piston pushes, pierces and compresses the solid under treatment against a plate with shock absorbing counterplate (35), mounted on expansion springs, that compacts it to a few millimeter thickness. Once the pressing phase is exhausted, the piston returns to its starting position by means of an electronic control sensor.

### Phase b) - Stocking.

During this phase a two way scale (36), controlled through an electromagnetic recognition system (36a), is oriented through a relais to the specific compartment in the container where the compacted metallic waste will be disposed.

The apparatus according to this invention also provides - for the treatment of paper and paper board (fourth function) - a device (6c) ), which also employs the above mentioned "automated electronic inlet and treatment phase starting system". Such device includes within its inside the functional means that are suitable to perform the foreseen operational phases, namely:

### Phase a) - Compactification

Starting the electric motor (11c) drives a number of toothed wheels coupled to a circular cam (37); a set of guided rods (38) connects them generating a rectilinear motion that ensure the maximum synchronism between the upper impacting piston (39) with rectangular sectioned head (39a) and the lower trimming piston (40), also having a rectangular sectioned head with punching grid (40a), positioned by means of a cam at 180° from each other. In fact the upper piston begins the pressing stroke by pushing the solid under treatment (e.g. paper board container and/or magazines) against an adjustable dampening expansion plate (41). During the phase of the upper piston return (39), the compacted solid falls by gravity into the lower bin, where the shearing piston (40) is open at its maximum width, and then begins the advance phase.

### Phase b) - Shearing.

The lower piston with rectangular shape (40), that bears on its head a particular "male" punching grid (40a), receives the compacted material and pushes it against a receiving "female" grid (42) shearing it to extra fine pieces. The receiving "female" grid (42) is arranged on an expanding system with adjustable calibration.

### Phase c) - Stocking

The fragments, obtained as above from the shearing treatment, fall by gravity into the container underneath (D.1), so becoming ready for collection in view of recycling.

From the above description and from the annexed drawings, the qualities of practicability, functionality and economy of the apparatus for the treatment of solid city waste being the object of the present industrial invention, can be easily noticed.

The apparatus and its component parts are here described and represented merely as an indicative non-limiting example and in any case with the only purpose of proving the actual realizability and the characteristics of the present invention.

From these premises it is possible to infer that the apparatus in object and the method of employment of the same may be subject to several variants and modifications, according to the specific requirements of each single case, as well as suggested by practical experience. Such variants may concern both the above mentioned functional pans, and their assembling and employment peculiarity, without passing the limits of the present invention.

## Claims

1. An apparatus for sorting, fractionating, compacting and collecting solid city waste comprising one single insulated and sound proof case (1) containing four separate devices (A,B,C,D), each device performing totally automated functions executing, in absolute safety and operational autonomy conditions, different treatments for each group of solid city waste consisting of:
- glass and ceramics,
- plastics and polystyrene,
- aluminium and plate
- paperboard and paper,
up to stocking the fractionated and compacted materials into separate containers (A1,B1,C1,D1), characterized in that the device (A9 for the treatment of glass and ceramics comprises:
- a presso-ramming piston (17), having a pressing motion and provided on its head with four smaller rammers (17a) with a cadenced and diversified ramming action, for disintegrating and fractionating the solid to coarse splinters,
- a worm triturator (19) suitable to transform the coarse splinters to an almost floury product; and
- a product selecting revolver (20) consisting of a threaded lock ring;- a revolver drum with four terminal holes, and four oriented pipes (21) connecting each terminal hole to a separate compartment of the container (A1).

2. The apparatus according to claim 1, characterized in that the "presso-ramming" piston (17) is in hardened stainless steel, with cylindrical shape and has inside the linear, horizontal with respect to the surface, within two protrusions, wheels with internal helicoid (12) engaging two worm shafts (14) that transmit a rectilinear pressing motion to the piston (17).

3. The apparatus according to claim 1 or 2, characterized in that the four rammers (17a) are provided with hardened steel heads that are released forward in cadenced sequence while the bearing piston (17) advances, these rammers being controlled through sensors activating an electromagnetic system granting a cadenced and diversified ramming action.

4. The apparatus according to anyone of the preceding claims, characterized in that the triturator consists of a bearing case stainless steel wherein are lodges a conical screw feeder (19) with cutting diamond-coated edges, a shear (27) with three diamond-coated blades and a disk provided with slots fixed to the case, these slots being inclined at 45° to its plane, grant a further effectual cutting angle for the same shear, the combined and synergistic action of the moving and fixed parts that form the triturator grants the possibility to obtain a final product that is extremely compact and ready for recycling.

5. The apparatus according to anyone of the preceding claims, characterized in that the device for the treatment of plastic and polystyrene comprises a piston (25) of stainless steel with the head having a convex profile with a circular depression in the center, at its sides, two protrusions lodge two helicoidal wheels with internal helicoid, suitable for engaging two worm shafts, the particular shape of the piston (25) grants both the pressing effect onto the object under treatment and the coupling in close position with rotating blades of a shear (26).

6. The apparatus according to claim 5, characterized in that the shear (26) is provided with three blades equally distanced of hardened stainless steel, having the shape of a truncated pyramid, having a concave profile that perfectly matches with the convexity of the pressing piston head (25) opposed in line with it, in the center of the shear (26) there is a hole for the connection to the rotor shaft with stop key, the speedier rotation of the shear (26) with respect to the material under treatment that is pushed forward by the piston, grants an oblique spinning cut applied to the material.

7. The apparatus according to anyone of the preceding claims, characterized in that the device for the treatment of aluminium and plate comprises a piston (29) with cylindrical shape, having at its sides two protrusions wherein are lodged two wheels with internal helicoid (30), suitable for engaging two worm shafts (31); such piston (29) being entirely made of hardened stainless steel cast and has on the head surface tricuspid rivets (29a), suitable to pierce the tight containers from the beginning of the piston (29) phase of compression.

8. The apparatus according to anyone of the preceding claims, characterized in that the device for the treatment of paper and paperboard comprises an upper cylinder with a first impacting piston (39) and a lower cylinder with a second trimming piston (40), said first (39) and second (40) pistons being moved in synchronism by guide rods (38) connected to toothed wheels moved by an electric motor (11c) and coupled to a circular cam (37); during the return phase of the first piston (39), the compacted material falls by gravity into the lower cylinder having the trimming piston (40) in the open position.

9. The apparatus according to claim 8, characterized in that the first piston (39) has a rectangular sectioned head (39a) and pushes the material to be treated against an adjustable dampening expansion plate (41) and the second piston (40) is rectangular shaped and is provided at its head with a male punching grid (40a) having on its surface a system of interchangeable blades that push the material under treatment against a receiving female grid (42); the two grids (40a,42), in hardened stainless steel cast, being respectively assembled in the following way: the male (40a) in the head of a piston (39) with rectangular section, driven by a crank system, the female (42) an dampening receiving system expanding by means of a spring system on counterplate.

10. The apparatus according to anyone of the preceding claims, characterized in that the containers (A1,B1,C1,D1) are standardized, hake the shape of a rectangular parallelepiped, are closed on top and provided with sliding ports for the access to the collected products after the treatment, with a hinged top plate, where the ports are lodged, with the purpose of facilitate the discharging of the contents, at their base there are provided four spherical embedded wheels that allow their displacement and their insertion into the apparatus by means of a couple of guide tracks with a function stop key; each container corresponds to a specific function and relevant treatment device being quite different from the other ones as to the number of compartments; outside they are provided with joining systems that facilitate their transport on vehicles in superimposed arrangement.

11. The apparatus according to anyone of the preceding claims, characterized in that it is provided at its base of a vibration damping stop system controlled through an electric motor (43) with two worm shafts the ends of which are engaged with shafts of two expansion suckers (44), the rotary motion lets the sucker shafts (44) turn until fixed on the floor, this system grants a perfect adhesion of the apparatus to the floor.

12. The apparatus according to anyone of the preceding claims, characterized in that each treatment device comprises an electronic photocell system (7) connected to a timer (8) that induces the opening of a loading port (9), where the electronic photocell beam is interrupted, and the closing of the loading port after an adjustable time from the disposal of the material to be treated; the moving of the port (9) activates a sensor activating an electric motor (11).

13. The apparatus according to anyone of the preceding claims, characterized in that all the phases of mechanical treatment of the solid city waste are granted by the motion transmission of an electric motor for each device and relevant function, having engaged with its shaft, by means of toothed wheels, crown wheels and pinions, belts, pulleys, cranks, connecting rods, bearing shafts, guides, worms, eccentric rotational systems, pistons, rotating shears, piercing systems and pressing systems, screw feeder triturators and roller triturators, rotating and impact cutters, and any other pertaining part helping for and integrating the operation of the apparatus, whereas all phases of motion transmission, stop and inversion of direction, are controlled through art electronic unit by means of electronic, electric and mechanical sensors, photocells, timers and relays or equivalent means

14. The apparatus according to anyone of the preceding claims, characterized in that it is manufactured in small dimension for family use; in medium dimension for small joint owner communities, restaurants or shops, or in large dimension for large joint communities, hospitals or hotels.

## Patentansprüche

1. Vorrichtung zum Sortieren, Fraktionieren, Kompaktieren und Sammeln von festem Stadtmüll, umfassend einen einzigen isolierten und schalldichten Behälter (1), der vier separate Einrichtungen (A, B, C, D) enthält, wobei jede Einrichtung vollständig automatisierte Funktionen durchführt, die unter absoluter Sicherheit und autonomen betriebstechnischen, Bedingungen unterschiedliche Behandlungen für jede Gruppe von festem Stadtmüll, der besteht aus:
- Glas und Keramik,
- Kunststoffen und Polystyrol,
- Aluminium und Blech,
- Pappe und Papier
bis zum Einlagern der fraktionierten und kompaktierten Materialien in separate Behälter (A1, B1, C1, D1) durchführen, **dadurch gekennzeichnet**, daß die Vorrichtung (A9) für die Behandlung von Glas und Keramik umfaßt:
- einen Preßrammkolben (17) mit einer Preßbewegung und ausgestattet an seinem Kopf mit kleineren Rammen (17a) mit einer abgestimmten und diversifizierten Rammwirkung zum Zerkleinern und Fraktionieren des Feststoffs zu groben Splittern,
- eine Schneckenmühle (19), die zur Umformung der groben Splitter zu einem fast mehligen Produkt geeignet ist; und
- einen Produkt-Auswahlrevolver (20), der aus einem mit Gewinde ausgestatteten Sperring, aus einem Trommelrevolver mit vier Anschlußlöchern und aus vier ausgerichteten Röhren (21) besteht, die jedes Anschlußloch mit einer separaten Kammer des Behälters (A1) verbinden.

2. Vorrichtung nach Anspruch 1, **dadurch gekennzeichnet**, daß der "Preßramm"-Kolben (17) aus gehärtetem rostfreien Stahl mit einer zylindrischen Gestalt ausgebildet ist und innerhalb der linearen Horizontalen in Hinblick auf die Oberfläche im Inneren von zwei Vorsprüngen Räder mit Innenspiralwindungen (12) aufweist, die mit zwei Schneckenwellen (14) im Eingriff stehen, wodurch eine geradlinige Preßbewegung an den Kolben (17) übertragen wird.

3. Vorrichtung nach Anspruch 1 oder 2, **dadurch gekennzeichnet**, daß die vier Rammen (17a) mit gehärteten Stahlköpfen ausgestattet sind, die in Richtung nach vom in einer abgestimmten Sequenz freigegeben werden, während sich der tragende Kolben (17) nach vorn bewegt, wobei diese Rammen durch Sensoren geregelt bzw. gesteuert sind, die ein elektromagnetisches System aktivieren, das eine abgestimmte und diversifizierte Rammbewegung bietet.

4. Vorrichtung nach irgendeinem der vorhergehenden Ansprüche, **dadurch gekennzeichnet**, daß die Mühle aus einem tragenden Gehäuse aus rostfreiem Stahl besteht, innerhalb dessen eine konische Schneckenfördereinrichtung (19) mit diamantbesetzten Schneidkanten, eine Schereinrichtung (27) mit drei diamantbesetzten Schneiden und eine Scheibe angeordnet sind, die mit Schlitzen ausgestattet und die an dem Gehäuse befestigt ist; wobei diese Schlitze, die unter 45° zu ihrer Ebene geneigt sind, einen weiteren wirksamen Schneidewinkel für die gleiche Schereinrichtung bieten, die kombinierte und synergistische Tätigkeit der sich bewegenden und der feststehenden Teile, die die Mühle bilden, die Möglichkeit bietet, ein Endprodukt zu erreichen, das äußerst kompakt und für das Recycling bereit ist.

5. Vorrichtung nach irgendeinem der vorhergehenden Ansprüche, **dadurch gekennzeichnet**, daß die Vorrichtung für die Behandlung von Kunststoff und Polystyrol eine Kolben (25) aus rostfreiem Stahl umfaßt, dessen Kopf ein konvexes Profil mit einer kreisförmigen Vertiefung im Zentrum aufweist, daß an seinen Seiten zwei Vorsprünge zwei mit Spiralwindungen ausgestattete Räder mit Innenspiralwindung aufnehmen, die für den Eingriff an zwei Schneckenwellen geeignet sind, wobei die besondere Gestalt des Kolbens (25) sowohl die Preßwirkung auf das in Behandlung stehende Objekt als auch die Kopplung in der Schließstellung mit den sich drehenden Schneiden einer Schereinrichtung (26) bietet bzw. zuläßt.

6. Vorrichtung nach Anspruch 5, **dadurch gekennzeichnet**, daß die Schereinrichtung (26) mit drei gleich beabstandeten Schneiden aus gehärtetem Stahl in der Gestalt eines Pyramidenstumpfes, mit einem konkaven Profil ausgestattet ist, das perfekt mit der Konvexität des Preßkolbenkopfes (25), der diesem auf einer Linie ihr gegenüberliegt, zusammenpaßt, daß in dem Zentrum der Schereinrichtung (26) ein Loch für die Verbindung zu der Rotorwelle mit einem Anschlagkeil vorgesehen ist, wobei der schnellere Umlauf der Schereinrichtung (26) in Hinblick auf das in Behandlung stehende Material, das mittels des Kolbens nach vom gedrückt wird, einen schrägen Spinnschnitt, der auf das Material zur Einwirkung gebracht wird, zuläßt.

7. Vorrichtung nach irgendeinem der vorhergehenden Ansprüche, **dadurch gekennzeichnet**, daß die Einrichtung zur Behandlung von Aluminium und Blech einen Kolben (29) mit zylindrischer Gestalt umfaßt, der an seinen Seiten zwei Vorsprünge aufweist, in denen zwei Räder mit Innenspiralwindung (30) aufgenommen sind, die um Eingriff an zwei Schneckenwellen (31) geeignet sind, wobei dieser Kolben (29) gänzlich aus gehärtetem rostfreien Stahlguß hergestellt ist und an der Kopffläche dreizackige Nieten (29a) aufweist, die geeignet sind, die dichten Behälter von Beginn der Kompressionsphase des Kolben (29) an zu durchdringen.

8. Vorrichtung nach irgendeinem der vorhergehenden Ansprüche, **dadurch gekennzeichnet**, daß die Einrichtung zur Behandlung von Papier und Pappe einen oberen Zylinder mit einem ersten Stoß Schlag (39) und einen unteren Zylinder mit einem zweiten Trimmkolben (40) umfaßt, wobei der erste und der zweite Kolben (30; 40) synchron mit Hilfe von Führungsstangen (38) bewegt werden, die mit verzahnten Rädern verbunden sind, die mittels eines Elektromotors (11c) bewegt werden und mit einem kreisförmigen Nocken (37) gekoppelt sind; wobei während der Rückstellphase des ersten Kolbens ( 39) das kompaktierte Material unter Schwerkrafteinwirkung in den unteren Zylinder fällt, dessen Trimmkolben (40) sich in der offenen Position befindet.

9. Vorrichtung nach Anspruch 8, **dadurch gekennzeichnet**, daß der erste Kolben (39) einen im Querschnitt rechteckigen Kopf (39a) aufweist und das zu behandelnde Material gegen eine einstellbare, Dämpfungszwecken dienende Expansionsplatte (41) drückt und der zweite Kolben (40) rechteckig gestaltet ist und an seinem Kopf mit einem vorstehenden Schlaggitter (40a) ausgestattet ist, das an seiner Oberfläche ein System von austauschbaren Schneiden ausweist, die das in Behandlung stehende Material gegen ein zurückgesetztes Aufnahmegitter (42) drücken, wobei die beiden Gitter (40a, 42) aus gehärtetem rostfreien Stahlguß bestehen und in der nachfolgend angegebenen Weise angebracht sind: das vorstehende Gitter (40a) in dem Kopf eines Kolbens (39) mit rechteckigem Querschnitt, der durch ein Kurbelsystem angetrieben ist, das zurückgezogenen Gitter (42) an einem Dämpfungszwecken dienenden Aufnahmesystem, das sich mittels eines Federsystems an einer Gegenplatte expandiert wird.

10. Vorrichtung nach irgendeinem der vorhergehenden Ansprüche, **dadurch gekennzeichnet**, daß die Behälter (A1, B1, C1, D1) genormt sind, die Gestalt eines rechteckigen Quaders aufweisen, an der Oberseite verschlossen sind und mit Schiebeanschlüssen für den Zugang zu den nach der Behandlung gesammelten Produkten, mit einer angelenkten oberen Platte, wo die Anschlüsse vorgesehen sind, zum Zwecke der Erleichterung der Abführung des Inhaltes ausgestattet sind, daß an ihrer Basis vier eingelassene kugelförmige Räder vorgesehen sind, die ihre Verschiebung und ihren Einsatz in die Vorrichtung mit Hilfe eines Paares von Führungsstangen mit einem Funktionsanschlagschlüssel gestatten, daß jeder Behälter einer besonderen Funktion und relevanten Behandlungsvorrichtung, die sich von jeder anderen gänzlich unterscheidet, entsprechend der Zahl der Räume entspricht, wobei sie außenseitig mit Verbindungssystemen ausgestattet sind, die ihren Transport auf Fahrzeugen in übereinander stehender Anordnung erleichtern.

11. Vorrichtung nach irgendeinem der vorhergehenden Ansprüche, **dadurch gekennzeichnet**, daß an ihrer Basis ein Vibrationsdämpfungs-Anschlagsystem vorgesehen ist, das über einen Elektromotor (43) mit zwei Schneckenwellen geregelt ist, deren Ende mit Wellen von zwei Expansionssaugern (44) in Eingriff stehen, wobei die Drehbewegung die Saugerwellen (44) drehen läßt, bis sie an dem Boden befestigt sind, wobei dieses System eine perfekte Haftung der Vorrichtung an dem Boden bietet.

12. Vorrichtung nach irgendeinem der vorhergehenden Ansprüche, **dadurch gekennzeichnet**, daß jede Behandlungsvorrichtung ein elektronisches Fotozellensystem (7) umfaßt, das mit einem Taktgeber (8) verbunden ist, der das Öffnen eines Beladeanschlusses, wobei der elektronische Fotozellenstrahl unterbrochen wird, und das Schließen des Beladeanschlusses nach einer einstellbaren Zeit von dem Wegwerfen des zu behandelnden Materials induziert, wobei das Bewegen des Anschlusses (9) einen Sensor aktiviert, der einen Elektromotor (11) aktiviert.

13. Vorrichtung nach irgendeinem der vorhergehenden Ansprüche, **dadurch gekennzeichnet**, daß alle Phasen der mechanischen Behandlung des festen Stadtabfalls durch die Bewegungsübertragung eines Elektromotors für jede Vorrichtung und die relevante Funktion, die mit ihrer Welle im Eingriff steht, mit Hilfe verzahnter Räder, Kronenrädern und Ritzeln, Riemen, Riebenscheiben, Kurbeln, Verbindungsstangen, Lagerwellen, Führungen, Schnecken, exzentrischen Rotationssystemen, Kolben, sich drehenden Schereinrichtungen, Durchstoßungssystemen und Preßsystemen, Schneckenförderer-Mühlen und Rollen- bzw. Walzenmühlen, sich drehenden Schneideinrichtungen und Schlagschneideinrichtungen und allen anderen zugehörigen Teilen, die einen Beitrag für die Arbeitsweise der Vorrichtung liefern und diese Arbeitsweise integrieren, gewährleistet sind, während alle Phasen der Bewegungübertragung, des Anhaltens und der Umkehr der Richtung durch eine elektronische Einheit mittels elektronischer, elektrischer und mechanischer Sensoren, Fotozellen, Taktgeber und Relais oder äquivalenter Mittel geregelt sind.

14. Vorrichtung nach irgendeinem der vorhergehenden Ansprüche, **dadurch gekennzeichnet**, daß sie in einer kleinen Abmessung für die familiäre bzw. häusliche Benutzung, in einer mittleren Abmessung für kleine Eigentümergemeinschaften, Restaurants oder Geschäfte oder in großer Abmessung für große Gemeinschaften, Krankenhäuser oder Hotels hergestellt ist.

## Revendications

1. Appareil pour trier, fractionner, compacter et collecter des déchets urbains solides, comprenant une seule enveloppe isolée et insonorisée (1) contenant quatre dispositifs distincts (A, B, C, D), chaque dispositif réalisant des fonctions totalement automatisées, en exécutant, dans des conditions d'autonomie fonctionnelle et de sécurité absolue, différents traitements pour chaque groupe de déchets urbains solides, comprenant:
- le verre et les céramiques,
- les plastiques et le polystyrène,
- l'aluminium et les plaques,
- le carton et le papier,
jusqu'au stockage des matériaux fractionnés et compactés dans des conteneurs distincts (A1, B1, C1, D1), caractérisé en ce que le dispositif (A), pour le traitement du verre et des céramiques, comprend:
- un piston de compression-pilonnage (17), ayant un mouvement de compression et étant pourvu, sur sa tête, de quatre petits pilons (17a) ayant une action de pilonnage cadencée et diversifiée, pour désintégrer et fractionner les déchets solides en gros morceaux,
- un broyeur à vis sans fin (19) approprié pour transformer les gros morceaux en un produit presque farineux, et
- un revolver de sélection de produit (20) constitué d'une bague de blocage filetée, d'un tambour de revolver avec quatre trous terminaux, et quatre tubes orientés (21) reliant chaque trou terminal à un compartiment distinct du conteneur (A1).

2. Appareil selon la revendication 1, caractérisé en ce que le piston de "compression-pilonnage" (17) est constitué d'acier inoxydable trempé, avec une forme cylindrique, et comprend, à l'intérieur de la chemise, horizontalement par rapport à la surface et à l'intérieur de deux parties saillantes, des roues ayant une hélice interne (12) et entrant en prise avec deux arbres à vis sans fin (14) qui transmettent au piston (17) un mouvement de compression rectiligne.

3. Appareil selon la revendication 1 ou 2, caractérisé en ce que les quatre pilons (17a) sont pourvus de têtes en acier trempé, qui sont dégagées vers l'avant en séquence cadencée lorsque le piston porteur (17) avance, ces pilons étant commandés par des capteurs activant un système électromagnétique réalisant une action de pilonnage cadencée et diversifiée.

4. Appareil selon l'une quelconque des revendications précédentes, caractérisé en ce que le broyeur est constitué d'un carter de support en acier inoxydable dans lequel sont logés un dispositif d'alimentation à vis conique (19) ayant des bords coupants diamantés, une cisaille (27) ayant trois lames diamantées et un disque muni d'entailles, fixée au carter ; ces entailles, inclinées à 45° par rapport au plan du disque, conférant à cette cisaille un angle de coupe utile plus important, l'action combinée et synergique des parties mobiles et fixes qui forment le broyeur offre la possibilité d'obtenir un produit final extrêmement compact et prêt pour le recyclage.

5. Appareil selon l'une quelconque des revendications précédentes, caractérisé en ce que le dispositif pour le traitement du plastique et du polystyrène comprend un piston (25) en acier inoxydable, dont la tête a un profil convexe et un abaissement circulaire aménagé en son centre, qui possède sur ses côtés, deux parties saillantes logeant deux roues hélicoïdales ayant une hélice interne, conçues pour entrer en prise avec deux arbres à vis sans fin, la forme particulière du piston (25) réalisant l'effet de compression sur l'objet en cours de traitement ainsi que l'accouplement en position fermée avec des lames rotatives d'une cisaille (26).

6. Appareil selon la revendication 5, caractérisé en ce que la cisaille (26) est munie de trois lames équidistantes en acier inoxydable trempé, ayant la forme d'une pyramide tronquée, et un profil concave qui se conjugue parfaitement à la forme convexe de la tête du piston de compression (25) se trouvant en regard d'elle, sur la même ligne, un trou pour le raccordement de l'arbre rotor avec une clavette d'arrêt étant aménagé au centre de la cisaille (26), la rotation la plus rapide de la cisaille (26) par rapport au matériau en cours de traitement, qui est poussé vers l'avant par le piston, permettant l'application sur le matériau d'une découpe oblique par centrifugation.

7. Appareil selon l'une quelconque des revendications précédentes, caractérisé en ce que le dispositif pour le traitement d'aluminium et de plaques comprend un piston (29) de forme cylindrique, ayant sur ses côtés deux parties saillantes dans lesquelles sont logées deux roues ayant une hélice interne (30), conçues pour entrer en prise avec deux arbres à vis sans fin (31) ; ce piston (29) étant entièrement constitué d'un moulage d'acier inoxydable trempé et ayant sur la surface de la tête des rivets à trois pointes (29a), conçus pour percer les conteneurs étanches au début de la phase de compression du piston (29).

8. Appareil selon l'une quelconque des revendications précédentes, caractérisé en ce que le dispositif pour le traitement du papier et du carton comprend un cylindre supérieur ayant un premier piston d'impact (39) et un cylindre inférieur ayant un deuxième piston de rognage (40), lesdits premier (39) et deuxième (40) pistons pouvant être déplacés de manière synchronisée par des tiges de guidage (38) reliées à des roues dentées mues par un moteur électrique (11c) et accouplées à une came circulaire (37) ; le matériau compacté tombant par gravité dans le cylindre inférieur ayant le piston de rognage (40) en position ouverte, pendant la phase de retour du premier piston (39).

9. Appareil selon la revendication 8, caractérisé en ce que le premier piston (39) a une tête à section rectangulaire (39a) et pousse le matériau à traiter contre une plaque d'extension et d'amortissement réglable (41), et le deuxième piston (40) a une forme rectangulaire et est muni, au niveau de sa tête, d'une grille de poinçonnage mâle (40a) ayant sur sa surface un système de lames interchangeables qui pousse le matériau en cours de traitement contre une grille réceptrice femelle (42), les deux grilles (40a, 42), constituées d'un moulage d'acier inoxydable trempé, étant respectivement assemblées de la manière suivante: la grille mâle (40a) se trouvant dans la tête d'un piston (39) ayant une section rectangulaire est entraînée par un système de biellemanivelle, et la grille femelle (42) aménagée sur le système récepteur d'amortissement est étendue par un système de ressort monté sur une contreplaque.

10. Appareil selon l'une quelconque des revendications précédentes, caractérisé en ce que les conteneurs (A1, B1, C1, D1) sont standardisés, ont une forme de parallélépipède rectangle, sont fermés sur le dessus et sont munis d'orifices de glissement laissant l'accès aux produits collectés après le traitement, où sont logés les orifices, avec une plaque supérieure articulée, afin de faciliter le déchargement du contenu ; quatre roues sphériques encastrées étant aménagées à l'endroit où les orifices sont formés, au niveau de la base des conteneurs, pour permettre leur déplacement et leur insertion dans l'appareil au moyen d'un couple de rails de guidage ayant une clavette d'arrêt fonctionnelle ; chaque conteneur correspondant à une fonction spécifique et à un dispositif de traitement approprié, qui se distingue des autres en ce qui concerne le nombre de compartiments ; à l'extérieur des conteneurs sont aménagés des systèmes d'assemblage qui facilitent leur transport sur des véhicules selon un aménagement superposé.

11. Appareil selon l'une quelconque des revendications précédentes, caractérisé en ce qu'il est prévu, au niveau de sa base, un système d'arrêt et d'amortissement des vibrations, commandé par un moteur électrique (43) avec deux bras à vis sans fin, dont les extrémités entrent en prise avec deux ventouses d'extension (44), le mouvant de rotation faisant tourner les arbres des ventouses (44) jusqu'à ce qu'elles soient fixées sur le sol, ce système réalisant une adhérence parfaite de l'appareil sur le sol.

12. Appareil selon l'une quelconque des revendications précédentes, caractérisé en ce que chaque dispositif de traitement comprend un système électronique (7) à cellules photoélectriques, raccordé à un minuteur (8) qui induit l'ouverture d'un orifice de chargement (9) lorsque le faisceau des cellules photoélectriques est interrompu, et la fermeture de l'orifice de chargement après un temps réglable à partir du moment où le matériau à traiter est mis au rebut ; le déplacement de l'orifice (9) active un capteur activant un moteur électrique (11).

13. Appareil selon l'une quelconque des revendications précédentes, caractérisé en ce que toutes les phases du traitement mécanique des déchets urbains solides sont réalisées par la transmission du mouvement d'un moteur électrique pour chaque dispositif et chaque fonction appropriée, entrant en prise avec son arbre au moyen de roues dentées, de couronnes et de pignons, de courroies, de poulies, de manivelles, de bielles, d'arbres porteurs, de guides, de vis sans fin, de systèmes rotatifs à excentriques, de pistons, de cisailles rotatives, de systèmes de perçage et de systèmes de pressage, de broyeurs à alimentation par vis sans fin et de broyeurs à rouleaux, de couteaux tournant et à impact, et de toute autre partie appartenant à ces derniers, facilitant et intégrant l'actionnement de l'appareil, tandis que toutes les phases de la transmission de mouvement, d'arrêt et d'inversion de direction, sont commandées par une unité électronique, au moyen de capteurs électroniques, électriques et mécaniques, de cellules photoélectriques, de minuteurs et de relais ou de moyens équivalents.

14. Appareil selon l'une quelconque des revendications précédentes, caractérisé en ce qu'il est fabriqué en petites dimensions pour un usage familial ; en dimensions moyennes pour de petites copropriétés, des restaurants ou des magasins ; ou bien en grandes dimensions pour de grandes copropriétés, des hôpitaux ou des hôtels.
